# EUROPEAN PATENT APPLICATION

(11) **EP 4 830 922 A1**
(43) Date of publication of application: **28.10.2026**
(21) Application number: 25918993.4
(22) Date of filing: 09.12.2025
(51) Int. Cl.: B32B 37/10, H01M 10/625, H01M 10/658

(54) **SILICON DIOXIDE AEROGEL HEAT INSULATION PAD, AND PREPARATION METHOD THEREFOR AND USE THEREOF**

(30) Priority: 24.01.2025 CN 202510122863
(71) Applicant: CNCEC Hualu New Materials Co., Ltd., Chongqing 401220 (CN)
(72) Inventor: HUANG, Kuntao, Chongqing 401220 (CN); XIONG, Feng, Chongqing 401220 (CN); LI, Hui, Chongqing 401220 (CN); CHEN, Cuicui, Chongqing 401220 (CN); TUO, Baohua, Chongqing 401220 (CN); LI, Zongcai, Chongqing 401220 (CN); ZHANG, Yi, Chongqing 401220 (CN); WU, Shaoqing, Chongqing 401220 (CN); XU, Fan, Chongqing 401220 (CN); TAN, Chong, Chongqing 401220 (CN); XU, Tuofu, Chongqing 401220 (CN); YANG, Zhiguo, Chongqing 401220 (CN); FU, Yuchuan, Chongqing 401220 (CN); YAO, Mingchuan, Chongqing 401220 (CN)
(74) Representative: Pons IP
(86) International application number: PCT/CN2025/141081
(87) International publication number: WO 2026/157615

(57) **Abstract**

The present disclosure relates to the technical field of battery thermal insulation pads, and provides a silica aerogel thermal insulation pad, a preparation method and use thereof. In the present disclosure, the preparation method includes: mixing a silicon source, an alcoholic solvent, water and an acidic catalyst to obtain a silica sol; mixing the silica sol, an alkaline catalyst and an additive, and compounding a resulting mixed sol with a fiber sheet to obtain a composite wet gel fiber sheet; subjecting the composite wet gel fiber sheet to aging modification, and then drying, pre-pressing and hot press molding in sequence to obtain the silica aerogel thermal insulation pad. The silica aerogel thermal insulation pad according to the present disclosure exhibits strong thermal insulation ability, good high-temperature resistance, good impact resistance and strong compression deformation resistance, and could avoid extrusion deformation of the automobile battery pack, thereby providing more reliable thermal insulation effect, effectively reducing unnecessary impact and heat transfer to the battery pack, improving the safety and durability of the automobile battery, and reducing the cost of maintenance and replacement.

## Description

### TECHNICAL FIELD

The present disclosure relates to the technical field of battery thermal insulation pads, and in particular to a silica aerogel thermal insulation pad, a preparation method and use thereof.

### BACKGROUND

Lithium-ion batteries have become the main power source of electric vehicles because of its high energy density, long life and good charging performance. However, lithium-ion batteries also have some safety hazards, one of which is the thermal runaway of the batteries. When one of the battery packs undergoes thermal runaway, if the fire could not be stopped in time, the whole automobile battery may be ignited, which will bring serious safety risks. Therefore, the thermal insulation performance of the automobile battery is critical. The existing automobile battery thermal insulation technology mainly uses a thermal insulation pad to isolate each battery pack to prevent the thermal runaway of the battery pack from igniting the adjacent battery pack.

In traditional automobile batteries, flame-retardant plastic partition plates such as polypropylene (PP), acrylonitrile butadiene styrene (ABS) and polyvinyl chloride (PVC) are used as thermal insulation pads, but the thermal insulation effect of the plastic partition plates is not good, and problems such as dissolution and fire are easy to occur in the partition plate when the battery temperature is too high. At present, ceramic fibers, aerogel felts, etc. could also be used to prepare thermal insulation pads. Ceramic fibers and aerogel felts exhibit good thermal insulation performance, which could effectively prevent heat transfer between battery packs. However, the ceramic fiber and aerogel felt thermal insulation pads on the market have poor impact resistance. When car encounters bumps in the daily driving process, it is easy to be compressed and deformed after being impacted, and the impact force may be transmitted through the thermal insulation pads, resulting in excessive impact on each battery pack, which may lead to extrusion deformation and spontaneous combustion of the battery.

In summary, there is an urgent need to provide a thermal insulation pad with good thermal insulation and strong impact resistance to improve the safety and durability of automobile batteries.

### SUMMARY

In view of this, the present disclosure provides a silica aerogel thermal insulation pad, a preparation method and use thereof. The silica aerogel thermal insulation pad according to the present disclosure exhibits good thermal insulation effect, good impact resistance and strong compression deformation resistance, and it also exhibits good high temperature resistance and could still maintain good thermal insulation performance under high temperature conditions.

### Beneficial effects:

According to the present disclosure, pre-pressing is performed before hot pressing molding, so the aerogel structure could be completely maintained and densified, and the impact resistance of the thermal insulation pad could be improved, so that the thermal insulation pad exhibits better compression deformation resistance and avoids extrusion deformation of the automobile battery pack, thereby providing a more reliable thermal insulation effect, effectively reducing unnecessary impact and heat transfer of the battery pack, improving the safety and durability of the automobile battery, prolonging the service life of the automobile battery and reducing the cost of maintenance and replacement. In the present disclosure, an additive is added to reduce the thermal conductivity of the thermal insulation pad at high temperature, thereby improving its thermal insulation ability and high temperature resistance. In the present disclosure, a hydrophobic modifier is also added during aging, so that the waterproof performance of the thermal insulation pad can be improved, and the water vapor in the external environment could be effectively prevented from entering the inside of the aerogel thermal insulation pad, the aerogel thermal insulation pad could maintain good thermal insulation performance even in a humid environment, and the problems such as reduced thermal insulation effect due to moisture could be avoided.

Further, according to the present disclosure, a gasket is used to control the pre-pressing thickness during pre-pressing, the effective retention of the aerogel structure could be further ensured, the thickness could also be controlled, and the thickness consistency of the packaged thermal insulation pad is better. Further, the fiber sheet used in the present disclosure could be single-layer or multi-layer, in which the thermal insulation performance of the thermal insulation pad could be further improved when multiple layers of the fiber sheet are laminated.

### BRIEF DESCRIPTION OF THE DRAWINGS

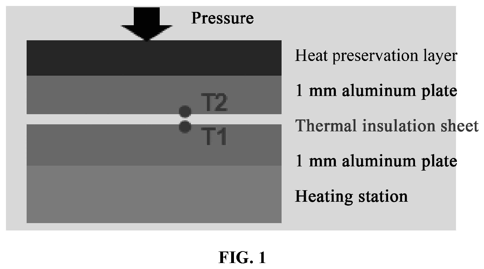

FIG. 1 shows a schematic diagram of the thermal insulation temperature difference test process in Examples of the present disclosure.

### DETAILED DESCRIPTION OF THE EMBODIMENTS

The present disclosure provides a method for preparing a silica aerogel thermal insulation pad, including the following steps:
mixing a silicon source, an alcoholic solvent, water and an acidic catalyst to obtain a silica sol;
mixing the silica sol, an alkaline catalyst and an additive, and compounding a resulting mixed sol with a fiber sheet to obtain a composite wet gel fiber sheet, where the additive is a form of inorganic particles;
subjecting the composite wet gel fiber sheet to aging modification in an aging modification solution to obtain a modified wet gel fiber sheet, where ingredients of the aging modification solution comprise an alcohol and a hydrophobic modifier;
drying the modified wet gel fiber sheet to obtain a silica aerogel fiber sheet; pre-pressing the silica aerogel fiber sheet to obtain a pre-pressed sheet; and
covering an upper surface and a lower surface of the pre-pressed sheet with a packaging material and then subjecting a resulting covered pre-pressed sheet to hot press molding to obtain the silica aerogel thermal insulation pad.

In the present disclosure, a silicon source, an alcoholic solvent, water and an acidic catalyst are mixed to obtain a silica sol. In the present disclosure, the silicon source preferably includes one or more selected from the group consisting of a silicate and an alkyl alkoxysilane; the silicate preferably includes one or two selected from the group consisting of ethyl orthosilicate and methyl orthosilicate; the alkyl alkoxysilane preferably includes one or more selected from the group consisting of methyl trimethoxysilane, dimethyl dimethoxysilane, methyl triethoxysilane, dimethyl diethoxysilane, vinyl triethoxysilane and propyl trimethoxysilane; the alcoholic solvent preferably includes one or more selected from the group consisting of methanol, ethanol, n-propanol and isopropanol; a molar ratio of the silicon source, the alcohol and the water is preferably in a range of 1: 5-30: 2-10, more preferably 1: 10-20: 5-8; the acidic catalyst preferably includes one or more selected from the group consisting of sulfuric acid, hydrochloric acid, nitric acid, oxalic acid, acetic acid or citric acid; and the acidic catalyst is preferably used in an amount such that the pH value of a resulting system is 2 to 6.

In the present disclosure, the mixing the silicon source, the alcoholic solvent, the water and the acidic catalyst is conducted at a temperature of preferably 20 °C to 60°C and more preferably 50°C for preferably 180 min to 480 min and more preferably 360 min. In the mixing process, the silicon source is hydrolyzed under the action of the acidic catalyst to obtain the silica sol.

In a specific embodiment of the present disclosure, it is preferred to mix the silicon source, the alcoholic solvent and the water evenly, then add the acidic catalyst dropwise until the pH value of the system is in a range of 2 to 6, and then conduct the hydrolysis reaction under the conditions of heat preservation and stirring.

According to the present disclosure, after the silica sol is obtained, the silica sol, the alkaline catalyst and the additive are mixed, and a resulting mixed sol is compounded with a fiber sheet to obtain a composite wet gel fiber sheet; and the additive is in the form of inorganic particles. In the present disclosure, the alkaline catalyst preferably includes one or more selected from the group consisting of sodium hydroxide, potassium hydroxide, aqueous ammonia and aqueous ammonium fluoride; the pH value of the mixed sol is preferably 6.5 to 8.5, and the gel time is preferably 1 min to 5 min, more preferably 2 min. In the present disclosure, the alkaline catalyst is used in an amount such that the pH value of the mixed sol and the gel time could be controlled within the above range. In a specific embodiment of the present disclosure, it is preferable to add the alkaline catalyst into the silica sol, and then add the additive.

In the present disclosure, the additive preferably includes one or more selected from the group consisting of titanium dioxide, silicon carbide, diatomaceous earth, aluminum hydroxide, magnesium hydroxide, hollow glass microspheres, hollow silica microspheres and hollow ceramic microspheres; a mass ratio of the additive to the silica sol is in a range of 1:30-300, and specifically 1:50, 1:100 or 1:150. In the present disclosure, by adding the above additives, the thermal conductivity of the thermal insulation pad at 500 °C to 600 °C could be reduced, and the thermal insulation performance of the thermal insulation pad at high temperature could be improved.

In the present disclosure, the fibers in the fiber sheet are preferably one or more selected from the group consisting of quartz fibers, glass fibers, high silica fibers, preoxidized fibers, mullite fibers, basalt fibers and ceramic fibers; the fiber sheet is in particular a fiber felt. The thickness of the fiber sheet is preferably determined according to the thickness of the target silica aerogel thermal insulation pad and the thickness tolerance during pre-pressing. In particular, the thickness of the silica aerogel thermal insulation pad can be 0.5 to 4 mm, and specifically may be 0.5 mm, 1 mm, 1.5 mm, 1.8 mm, 2.5 mm, 3 mm or 4 mm, and when the thickness of the silica aerogel thermal insulation pad is ≤ 2 mm, the thickness tolerance during pre-pressing is ≤ ± 0.2mm; when the thickness of the silica aerogel thermal insulation pad is > 2 mm, the thickness tolerance during pre-pressing is ≤ ± 0.3 mm; In a specific embodiment of the present disclosure, the thickness of the fiber sheet may be selected according to actual requirements.

In the present disclosure, a layer number of the fiber sheet is ≥ 1, that is, the fiber sheet can be single-layer or multi-layer lamination, preferably multi-layer lamination. When multi-layer lamination is used, the layer number of the fiber sheet is preferably 2 to 10, and specifically may be 2, 3, 4 or 5. When the fiber sheet is multi-layer lamination, the thickness of each layer of the fiber sheet may be the same or different. In particular, when the fiber sheet is multi-layer lamination, it is preferable to use a fiber sheet with a thickness of ≤ 1 mm, and more preferable to use a fiber sheet with a thickness of ≤ 0.5 mm. In the present disclosure, the thermal insulation capacity of the obtained thermal insulation pad could be further improved by using multiple layers of the fiber sheet for lamination.

In the present disclosure, the mixed solution and the fiber sheet are preferably compounded in such a way that the fiber sheet is impregnated in a mixed sol. In the present disclosure, there is no specific limitations on the specific time of impregnation, which specifically may be 10 s.

In the present disclosure, after the composite wet gel fiber sheet is obtained, the composite wet gel fiber sheet is subjected to aging modification in an aging modification solution to obtain a modified wet gel fiber sheet. In the present disclosure, the components of the aging modification solution include an alcohol and a hydrophobic modifier, and the alcohol is preferably a lower alcohol with 1 to 6 carbon atoms, more preferably a lower alcohol with 1 to 3 carbon atoms, and specifically may be methanol, ethanol, n-propanol or isopropanol; the hydrophobic modifier preferably includes one or more selected from the group consisting of trimethylmethoxysilane, hexamethyldisilazane and trimethylchlorosilane; a volume of the hydrophobic modifier is preferably 2% to 10% of a volume of alcohol in the aging modification solution, and specifically may be 5%, 8% or 10%. In the present disclosure, by adding the hydrophobic modifier, the hydrophobicity of the thermal insulation pad could be improved, the structure of the thermal insulation pad would not change and the performance would not be deteriorated in a humid environment.

In the present disclosure, the aging modification is conducted at a temperature of preferably 30 °C to 60 °C, and specifically may be 40°C, 50°C, or 60°C. In the present disclosure, the aging modification is conducted for preferably 3 h to 48 h, and specifically may be 5 h, 10 h, 24 h or 48 h. The aging modification is preferably conducted at under sealed and standing conditions.

In the present disclosure, after the modified wet gel fiber sheet is obtained, the modified wet gel fiber sheet is subjected to drying to obtain a silica aerogel fiber sheet. In the present disclosure, the drying is preferably a supercritical CO₂ drying; the supercritical CO₂ drying is conducted at a pressure of preferably 10 MPa to 20 MPa, and specifically may be 12 MPa, 15 MPa or 18 MPa, the drying is conducted at a temperature of preferably 40 °C to 80 °C, and specifically may be 50°C or 60°C, and the drying is conducted for preferably 3 h to 10 h, and specifically may be 4 h or 6 h.

According to the present disclosure, after the silica aerogel fiber sheet is obtained, the silica aerogel fiber sheet is subjected to pre-pressing to obtain a pre-pressed sheet. In the present disclosure, the pre-pressing is conducted at a pressure of preferably 120 kg/cm² to 160 kg/cm², and specifically may be 130 kg/cm², 150 kg/cm² or 160 kg/cm²; the pre-pressing is conducted for preferably 20 s to 30 s, and specifically may be 20 s or 25 s; gaskets are placed on both sides of the silica aerogel fiber sheet during the pre-pressing. The gasket is preferably a gasket made of a rigid material, and specifically may be a stainless steel gasket; the thickness of the gasket is preferably selected according to the thickness requirements of the target aerogel thermal insulation pad; the thickness deviation of the resulting silica aerogel sheet is controlled within the thickness tolerance during the pre-pressing. In the present disclosure, the gaskets are used in the pre-pressing treatment, so that the thickness could be controlled, the uniformity and consistency of the thickness could be improved, the aerogel structure could be also effectively retained, and the impact resistance of the aerogel thermal insulation pad could be improved.

In the present disclosure, after the pre-pressed sheet is obtained, the upper and lower surfaces of the pre-pressed sheet are covered with a packaging material and then subjected to hot press molding to obtain the silica aerogel thermal insulation pad. In the present disclosure, the packaging material is a polymer film; the polymer film is preferably one or more selected from the group consisting of polyester film, polyimide film, polyvinyl chloride film, polycarbonate film, polyethylene film and polyphenylene sulfide film; the hot press molding is conducted at a temperature of preferably 80 °C to 100 °C, and specifically may be 80 °C, 85 °C, 90 °C or 100 °C, the hot press molding is conducted at a pressure of preferably 120 kg/cm² to 140 kg/cm², and specifically may be 130 kg/cm², and the hot press molding is conducted for preferably 30 s to 50 s, and specifically may be 40 s or 50 s. The hot pressing molding is preferably conducted using a vacuum hot press.

The present disclosure also provides a silica aerogel thermal insulation pad prepared by the method as described in the above scheme, which includes the silica aerogel fiber sheet and the polymer film provided on the surface of the silica aerogel fiber sheet; the silica aerogel fiber sheet includes a fiber sheet and silica aerogel filled in the gap between the fiber sheets.

The present disclosure also provides use of the silica aerogel thermal insulation pad as described in the above scheme in automotive batteries; the automotive batteries are specifically batteries used in a new energy vehicle.

The technical solutions of the present disclosure will be clearly and completely described below with reference to the examples of the present disclosure. Apparently, the examples described are merely some rather than all of the examples of the present disclosure. Based on the examples of the present disclosure, all other examples that would have been obtained by those of ordinary skill in the art without any creative efforts shall fall within the scope of protection of the present disclosure.

### Example 1

200 g of tetramethyl orthosilicate, 520 g of anhydrous methanol and 130 g of distilled water were poured into a container. A resulting mixture was stirred for 10 min to uniformly mix. And then concentrated nitric acid was added dropwise thereto to adjust a pH value to 3. A resulting solution was stirred at 50 °C for 360 min, an alkaline catalyst ammonia water was added thereto to adjust the pH value to 8, and then 6 g of titanium dioxide and 6 g of diatomaceous earth were added thereto. A resulting mixed sol was compounded with five layers of laminated fiber felts (the thickness of a single layer was 0.3 mm, and the fiber was a glass fiber) to obtain a composite wet gel fiber sheet. The composite wet gel fiber sheet was added into an aging modification solution (formulated from methanol and hexamethyldisilazane, with a volume fraction of hexamethyldisilazane accounting for 3% of methanol), sealed at 55 °C and left standing and aged for 10 h to obtain a modified wet gel fiber sheet. The modified wet gel fiber sheet was dried by supercritical CO₂ at a temperature of 50 °C and a pressure of 12 MPa for 4 h. A resulting dried silica aerogel fiber sheet was pre-pressed at a pressure of 160 kg/cm² for 20 s, the stainless steel gaskets with a thickness of 0.9 mm were placed on both sides of the silica aerogel fiber sheet, and the thickness of the pre-press sheet was controlled to be 0.9 mm to 1.1 mm. The temperature of the hot press was set at 80 °C, the pressure was set at 130 kg/cm², and the time was set at 50 s. An upper polyester film, the pre-pressed sheet and a lower polyester film were placed in the hot press sequentially to conduct packaging to obtain the silica aerogel thermal insulation pad.

### Example 2

The other conditions were the same as in Example 1, only except that the fiber mat was replaced with 3 layers of laminated fiber felts, and the thickness of a single layer was 0.5 mm.

### Example 3

The other conditions were the same as in Example 1, only except that the fiber felt was replaced with one layer of 1.5 mm fiber felt.

### Example 4

The other conditions were the same as in Example 1, only except that the fiber felt was replaced with 2 layers of 1 mm + 2 layers of 0.3 mm of laminated fiber felts; in addition, during pre-pressing, stainless steel gaskets with a thickness of 2 mm were placed on both sides of the silica aerogel fiber sheet, and the thickness of the pre-press sheet was controlled to be 1.9 mm to 2.1 mm.

### Example 5

The other conditions were the same as in Example 1, only except that the fiber felt was replaced with one layer of 2.5 mm fiber felt; in addition, during pre-pressing, stainless steel gaskets with a thickness of 2 mm were placed on both sides of the silica aerogel fiber sheet, and the thickness of the pre-press sheet was controlled to be 1.9 mm to 2.1 mm.

### Comparative Example 1, the pre-pressing process was omitted

The other conditions were the same as in Example 1, only except that the fiber felt was replaced with one layer of 1 mm fiber felt; in addition, the pre-pressing process was omitted, and the resulting silica aerogel fiber sheet was directly hot-pressed. The temperature of the hot press was set at 80°C, the pressure was set at 100 kg/cm², and the time was set at 50 s. An upper polyester film, a dried silica aerogel fiber sheet and a lower polyester film were placed in the hot press in turn for packaging to obtain the silica aerogel thermal insulation pad.

### Comparative Example 2, the pre-pressing process was omitted

The other conditions were the same as in Example 1, only except that the fiber felt was replaced by one layer of 2 mm fiber felt; in addition, the pre-pressing process was omitted, and the obtained silica aerogel fiber sheet was directly hot-pressed. The temperature of the hot press was set at 80°C, the pressure was set at 100 kg/cm², and the time was set at 50 s. An upper polyester film, a dried silica aerogel fiber sheet and a lower polyester film were placed in the hot press sequentially to conduct packaging to obtain the silica aerogel thermal insulation pad.

### Comparative Example 3, the additive was omitted

The other conditions were the same as in Example 1, only except that the addition of titanium dioxide and diatomaceous earth was omitted.

### Comparative Example 4, the hydrophobic modifier was omitted

The other conditions were the same as in Example 1, only except that the addition of the hydrophobic modifier was omitted in the aging modification solution and only methanol was used for aging.

### Performance tests

The thermal conductivity at room temperature, thermal conductivity at high temperature, bulk density, thickness, strain at 1 MPa, strain at 2 MPa and thermal insulation temperature difference of the silica aerogel thermal insulation pads prepared in Examples 1-5 and Comparative Examples 1-4 were tested. In the tests:
the test method of the thermal insulation temperature difference was as follows: a heating station was heated, and when the temperature of a hot surface reached 430°C, a heat preservation layer of a 18 mm calcium silicate board, a 1 mm aluminum block (a T2 sensor was fixed on the aluminum block with a PI glue), a silica aerogel thermal insulation pad and a 1mm aluminum block (a T1 sensor was fixed on the aluminum block with a PI glue) was placed in order, and then placed on a heating station, and 0.7 MPa pressure was applied. When the hot surface temperature reached 500°C, the timing was started, and the T2 and T1 temperatures were recorded at 10 min, and the thermal insulation temperature difference was T1-T2. The schematic diagram of the thermal insulation temperature difference test process is shown in FIG. 1.

The test methods of strain at 1 MPa and strain at 2 MPa were as follows: the sample with a size of 5 cm × 5 cm was placed into a universal testing machine for testing, wherein the maximum force was set at 20 kN and the inlet force was set at 35 N, and the strain at 1 MPa and strain at 2 MPa were recorded. The thickness retention at 2 MPa was also recorded.

The specific test results are shown in Table 1.

**Table 1. Results of the performance test of the silica aerogel thermal insulation pad**

| Item/standard | Thermal conductivity at room temperature W/(m²·K) | Thermal conductivity at 500°C W/(m²·K) | Bulk density kg/m³ | Thickness (mm) | Strain at 1 Mpa (%) | Strain at 2 Mpa (%) | Thickness retention at 2 Mpa | Thermal insulation temperature difference (°C) |
|---|---|---|---|---|---|---|---|---|
| Example 1 | 0.01788 | 0.08652 | 312 | 1.0 | 23.3 | 33.5 | 89.9% | 174.7 |
| Example 2 | 0.01832 | 0.08880 | 306 | 0.99 | 22.1 | 31.8 | 90.6% | 170.5 |
| Example 3 | 0.01802 | 0.08932 | 315 | 0.95 | 22.8 | 33.3 | 90.4% | 159.2 |
| Example 4 | 0.01734 | 0.08668 | 290 | 2.02 | 21.8 | 31.4 | 92.4% | 245.8 |
| Example 5 | 0.01755 | 0.08813 | 295 | 2.08 | 23.7 | 34.2 | 91.5% | 231.6 |
| Comparative Example 1 | 0.01721 | 0.09173 | 256 | 1.26 | 56 | 68.5 | 67.7% | 148.3 |
| Comparative Example 2 | 0.01771 | 0.09094 | 248 | 2.35 | 53.2 | 64.3 | 64.2% | 211.8 |
| Comparative Example 3 | 0.01821 | 0.12364 | 306 | 1.02 | 21.4 | 32.7 | 90.2% | 152.1 |
| Comparative Example 4 | 0.01894 | 0.08557 | 298 | 0.97 | 22.8 | 31.4 | 91.2% | 176.4 |

As can be seen from the data in Table 1, the strains of silica aerogel thermal insulation pads prepared in Examples 1-5 under the load of 1 Mpa and 2 MPa are obviously less than that in Comparative Examples 1-2, and the thickness retention rate at 2 MPa is obviously higher than that in Comparative Examples 1-2, which indicates that the aerogel structure could be completely maintained under this pre-pressing pressure, and it could also be densified to improve the impact resistance of the thermal insulation pads, and the obtained thermal insulation pads are not easy to be compressed and deformed. According to Example 3 and Comparative Example 1, Example 5 and Comparative Example 2, it can be seen that the thermal insulation performances of the thermal insulation pads obtained in Examples 3 and 5 are better than those in Comparative Examples 1 and 2 under the condition of using single-layer fiber sheets, this is because the thermal insulation performance became better with the introduction of the pre-pressing process. In addition, when the single-layer fiber sheet (Example 3) was used, the performances of the obtained thermal insulation pad was also excellent in all aspects, but in the case of similar thickness of thermal insulation pads, the thermal insulation performances of the thermal insulation pads obtained in Examples 1-2 were better than those in Example 3, this is because the gaps between each layer of fiber sheets were filled with aerogel in the multi-layer lamination manner, which reduces the heat conduction between fibers, thereby improving the thermal insulation performance. In addition, according to Comparative Example 3, it can be seen that after the additive was omitted, the high thermal conductivity of the obtained thermal insulation pad is obviously increased, and the thermal insulation performance at high temperature is poor.

The hydrophobicity of Examples 1-5 and Comparative Examples 1-4 was tested, the obtained thermal insulation pads were treated at 50°C and 95% RH for 24 h, and then the thermal conductivity at room temperature was further tested. The test results are shown in Table 2.

**Table 2. Results of the hydrophobicity test of the silica aerogel thermal insulation pad**

| Item/standard | Thermal conductivity at room temperature after 24 h treatment at 50°C and 95% RH | Hydrophobicity |
|---|---|---|
| Example 1 | 0.01820 | 99.2% |
| Example 2 | 0.01892 | 99.1% |
| Example 3 | 0.01873 | 99.3% |
| Example 4 | 0.01775 | 99.2% |
| Example 5 | 0.01802 | 99.3% |
| Comparative Example 1 | 0.01794 | 99.2% |
| Comparative Example 2 | 0.01853 | 99.1% |
| Comparative Example 3 | 0.01886 | 99.2% |
| Comparative Example 4 | 0.02434 | 0% |

As can be seen from the data in Table 2, the silica aerogel thermal insulation pad prepared in the present disclosure exhibits high hydrophobicity and could also maintain good thermal insulation performance in humid environment. In Comparative Example 4, use of the hydrophobic modifier was omitted, the obtained thermal insulation pad exhibits no hydrophobicity, and the thermal conductivity is obviously increased after treatment in humid environment.

The foregoing descriptions are merely preferred embodiments of the present disclosure, and it should be noted that for those of ordinary skill in the art, without departing from the principles of the present disclosure, some improvements and refinements may also be made, which should also be considered as the scope of the present disclosure.

## Claims

1. A method for preparing a silica aerogel thermal insulation pad, comprising the following steps:
mixing a silicon source, an alcoholic solvent, water and an acidic catalyst to obtain a silica sol;
mixing the silica sol, an alkaline catalyst and an additive, and compounding a resulting mixed sol with a fiber sheet to obtain a composite wet gel fiber sheet, wherein the additive is in a form of inorganic particles;
subjecting the composite wet gel fiber sheet to aging modification in an aging modification solution to obtain a modified wet gel fiber sheet, wherein ingredients of the aging modification solution comprise an alcohol and a hydrophobic modifier;
drying the modified wet gel fiber sheet to obtain a silica aerogel fiber sheet;
pre-pressing the silica aerogel fiber sheet to obtain a pre-pressed sheet; and
covering an upper surface and a lower surface of the pre-pressed sheet with a packaging material and then subjecting a resulting covered pre-pressed sheet to hot press molding to obtain the silica aerogel thermal insulation pad.

2. The method of claim 1, wherein the silicon source comprises one or more selected from the group consisting of a silicate and an alkyl alkoxysilane; the alcoholic solvent comprises one or more selected from the group consisting of methanol, ethanol, n-propanol and isopropanol; and a molar ratio of the silicon source, the alcohol and the water is in a range of 1: 5-30: 2-10;
the acidic catalyst comprises one or more selected from the group consisting of sulfuric acid, hydrochloric acid, nitric acid, oxalic acid, acetic acid or citric acid; and the acidic catalyst is used in an amount such that a pH value of a resulting system is in a range of 2 to 6; and
the mixing the silicon source, the alcoholic solvent, the water and the acidic catalyst is conducted at a temperature of 20 °C to 60 °C for 180 minutes (min) to 480 min.

3. The method of claim 2, wherein the silicate comprises one or two selected from the group consisting of ethyl orthosilicate and methyl orthosilicate; and the alkyl alkoxysilane comprises one or more selected from the group consisting of methyl trimethoxysilane, dimethyl dimethoxysilane, methyl triethoxysilane, dimethyl diethoxysilane, vinyl triethoxysilane and propyl trimethoxysilane.

4. The method of claim 1, wherein the alkaline catalyst comprises one or more selected from the group consisting of sodium hydroxide, potassium hydroxide, aqueous ammonia and aqueous ammonium fluoride; the resulting mixed sol has a pH value 6.5 to 8.5, and a gel time is 1 min to 5 min;
the additive comprises one or more selected from the group consisting of titanium dioxide, silicon carbide, diatomaceous earth, aluminum hydroxide, magnesium hydroxide, hollow glass microspheres, hollow silica microspheres and hollow ceramic microspheres; and a mass ratio of the additive to the silica sol is in a range of 1: 30-300;
fibers in the fiber sheet are one or more selected from the group consisting of quartz fibers, glass fibers, high silica fibers, preoxidized fibers, mullite fibers, basalt fibers and ceramic fibers; and
a layer number of the fiber sheet is ≥ 1.

5. The method of claim 1, wherein the alcohol in the aging modification solution is a lower alcohol with 1 to 6 carbon atoms, and the hydrophobic modifier comprises one or more selected from the group consisting of trimethylmethoxysilane, hexamethyldisilazane and trimethylchlorosilane; and a volume of the hydrophobic modifier is 2% to 10% of the volume of alcohol in the aging modification solution; and
the aging modification is conducted at a temperature of 30 °C to 60 °C for 3 hours (h) to 48 h.

6. The method of claim 1, wherein the drying is conducted by supercritical CO₂ drying; the supercritical CO₂ drying is conducted at a pressure of 10 megapascal (MPa) to 20 MPa and a temperature of 40 °C to 80 °C for 3 h to 10 h.

7. The method of claim 1, wherein the pre-pressing is conducted at a pressure of 120 kg/cm² to 160 kg/cm² for 20 seconds (s) to 30 s; and gaskets are placed on both sides of the silica aerogel fiber sheet during the pre-pressing.

8. The method of claim 1, wherein the packaging material is a polymer film; and the hot press molding is conducted at a temperature of 80 °C to 100 °C and a pressure of 120 kg/cm² to 140 kg/cm² for 30 s to 50 s.

9. A silica aerogel thermal insulation pad prepared by the method of any one of claims 1-8.

10. Use of the silica aerogel thermal insulation pad of claim 9 in automotive batteries.
